(19) Europäisches Patentamt
European Patent Office
Office européen des brevets

(11) EP 4 289 702 A1

(12) EUROPEAN PATENT APPLICATION

(43) Date of publication:
13.12.2023 Bulletin 2023/50

(51) International Patent Classification (IPC):
B62D 15/02 (2006.01)    G01S 5/16 (2006.01)

(21) Application number: 22177621.4

(52) Cooperative Patent Classification (CPC):
B62D 15/0285; G01S 5/16

(22) Date of filing: 07.06.2022

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Valeo Internal Automotive Software
Egypt,
a limited liability company
Giza, Cairo (EG)

(72) Inventor: RADWAN, Mohamed
Giza, Cairo (EG)

(74) Representative: Hofstetter, Schurack & Partner
Patent- und Rechtsanwaltskanzlei
PartG mbB
Balanstrasse 57
81541 München (DE)

(54) **METHOD TO OPERATE AN AT LEAST ASSISTED PERPENDICULAR OR ANGLED PARKING FUNCTION FOR A VEHICLE**

(57)     Method and vehicle (1) to operate an at least assisted perpendicular or angled parking function for the vehicle (1). The vehicle (1) has at least partially passed a perpendicular or angled parking space (11) and an object (12) and is located at a first location (16). The method comprises determining (S5) a second location (17) reachable from the first location (16) by moving the vehicle (1) at least partially straight backwards, , wherein at the second location (17) the vehicle (1) is movable backwards away from the parking space (11) with a maximal steering angle of a steering system (3) of the vehicle (1) without collision with the object (12) to prepare parking into the parking space (11); and operating (S6) the vehicle (1) at least assisted to move the vehicle (1) from the first location (16) to the second location (17).

Fig.2

**Description**

The invention relates to a method to operate an at least assisted perpendicular or angled parking function for a vehicle. The invention also relates to a vehicle with an at least assisted perpendicular or angled parking function, a processing device for such a vehicle and a computer program product.

A vehicle may comprise an assisted parking function configured to provide steering and/or acceleration commands for operating the vehicle during a parking maneuver. The parking maneuver typically comprises moving the vehicle between a position located outside of a parking space and a parking position in the parking space. The operation of the at least assisted parking function thus may comprise longitudinal and/or transversal guidance of the vehicle.

A parking maneuver, for example, for forward perpendicular or angled parking with none or only few changes of driving direction of the vehicle may be challenging, particularly in a tight parking environment where, for example, an area for maneuvering outside the sparking space is limited.

It is the object of the invention to provide at least assisted perpendicular or angled parking in a tight parking environment.

The object is solved by the independent claims.

A first aspect of the invention relates to a method to operate an at least assisted perpendicular or angled parking function for a vehicle. The parking function is in particular configured for forward parking. Alternatively or additionally, the parking function may be configured for backward parking. The method is applied in a situation in which the vehicle has at least partially passed a perpendicular or angled parking space and an object. In particular, the parking space is laterally bounded by the object. The vehicle is located at a first location adjacent to the object. In particular, it is located adjacent to a front line of the object. The front line of the object is a side of the object that faces surroundings of the parking space. In other words, if the vehicle approaches the parking space and the object, the ground on which it is driving particularly abuts the front line of the object. The front line of the object is hence the side of the object that faces, for example, a road on which the vehicle is located. The front line of the object may adjoin a side line of the object. The side line may face the parking space.

The method is based on a parking scenario in which the vehicle has been stopped at a first location, wherein to reach the first location, the vehicle has at least partially passed the parking space and is located with at least a part of a side of the vehicle adjacent to the object. The side of the vehicle is a driver's side or an opposite passenger's side of the vehicle. At the first location, the vehicle at least temporarily stops to prepare a straight backward maneuver to move to a second location. Starting at the second location, the vehicle may steer backward away from the parking space at a steering angle that is, for example, a maximum steering angle of a steering system of the vehicle to reach a third location. Starting at the third location, the vehicle may move forward in a parking position in the parking space, preferably without any change in driving direction. The parking space in the sense of invention is an available parking space in which the vehicle intends to park. It is assumed that the vehicle has already determined the parking position in the parking space, which it intends to reach for parking. The following method, however, focuses on determining the second location and moving the vehicle from the first location to the second location.

The method is based on the observation that during parking situations, in which a vehicle starts parking in the parking space from a first location relatively close to the object, it is highly demanding for the driver to find the second location where the vehicle can steer freely away from the parking space without collision with the object. It is hence reasonable to provide specific calculations and thus a determination method to determine the second location.

The method comprises providing a sensor information. The sensor information describes the perpendicular or angled parking space and the object. The provided sensor information may describe, for example, a distance between the vehicle and the parking space and the object, respectively. The sensor information may be described by distance data. Alternatively or additionally, the sensor information may be described by static or moving visual data, such as camera data. In general, the sensor information is described by sensor data. The sensor information may, for example, be provided by a sensor device of the vehicle and/or by a sensor device external to the vehicle. The sensor information allows evaluation of a position of the parking space and of the object, in particular of the front line of the object.

The method also comprises providing the first location information, which describes the first location of the vehicle. The first location information comprises, for example, coordinates of a current position of the vehicle. Preferably, at the first location the vehicle is close to the front line of the object.

The method comprises determining a second location information. This is performed under consideration of the provided sensor information and first location information. The second location information describes the second location for the vehicle. The second location is reachable from the first location when moving the vehicle at least partially straight backwards. Preferably, the movement between the first and second location is a straight backward movement without any change in steering angle. There is hence preferably no difference regarding an orientation of the vehicle between the first and the second location. At the second location, the vehicle is movable backwards away from the parking space with a maximum steering angle of the steering system of the vehicle without collision with the object. This steering maneuver away from the parking space is performed to reach the third location and hence to prepare parking in the parking space. It is possible for the vehicle to be moved backwards away from the second location at a steering angle smaller than the maximum steering angle.

Further, the method comprises operating the vehicle at least assisted to move the vehicle from the first location according to the first location information to the second location according to the determined second location information. It is possible provide acceleration commands for longitudinal guidance of the vehicle and to execute them. The acceleration commands are intended for a drive system of the vehicle. Alternatively or additionally, it is possible to provide steering commands for transverse guidance of the vehicle and to execute them in order to keep the movement to the second location at least partially and preferably completely straight. The transversal and/or longitudinal guidance of the vehicle is hence provided at least assisted by the parking function. Preferably, the vehicle is operated fully automatically between the first location and the second location.

Since the vehicle is moved at least assisted to the second location, it is possible for the vehicle to easily reach the third location and starting from there park in the parking space without further switching the driving direction. It is not necessary to perform any steering to reach the second location so that the operation of the vehicle to reach the second location is particularly easy as no steering commands are necessary. The method results in an at least assisted driving maneuver to prepare the forward perpendicular or angled parking. As there is no steering necessary to reach the second location, it is possible to park the vehicle in tiny or small parking environments.

The object can alternatively be referred to as an end object. The reason for this is that if the vehicle passes by the parking space it may first passes a start object that is positioned on a first side of the parking space. Then it passes by the parking space itself and then reaches an end object which is positioned opposite the start object and hence on the other side of the parking space. For the inventive method, the start object has no particular relevance therefore the only object that is described in the following is the end object.

The perpendicular or angled parking space may alternatively be referred to as diagonal parking space. The angled parking space may alternatively be referred to as a fishbone parking space. The parking space has an entrance side oriented towards, for example, a road. The entrance side is shorter than adjacent sides of the parking space. At the parking position in the parking space, a length of the vehicle is essentially parallel to the adjacent sides and a width of the vehicle is essentially parallel to the entrance side. An angle between the entrance side and the adjacent sides is typically between greater than 0 and 90 degrees. The two objects may face the adjacent sides of the parking space. A front line of each or of at least one of the objects is preferably essentially parallel to the entrance side of the parking space.

According to an embodiment, the first location information describes a position. The first location information also describes an orientation of the first location in relation to a reference plain. The position can be specified as coordinates, for example, as x- and y-coordinates. An origin of a corresponding coordinate system may be a point of the reference plain. In particular, an x-axis of the coordinate system corresponds to a horizontal direction and a y-axis to a vertical direction. The vertical orientation may be parallel to a length direction of the perpendicular or angled parking space. The orientation may be described by an angle, which is, for example, defined in relation to the horizontal direction. The angle between the horizontal direction and the vehicle, meaning the orientation of the vehicle in the first location, is typically greater than 0 degree and smaller than 90 degree. The reference plain may be specified by the horizontal direction and a height direction perpendicular to both the horizontal and the vertical direction. The second location information may as well describe a position and an orientation of the second location. The combination of a position and orientation for the first location allows to base the determination of the second location on trigonometry so that the performed calculations are particularly easy to perform.

Another embodiment comprises that determining the second location information comprises calculating an angle information describing in the second location an angle between a front outermost corner of the vehicle facing the front line of the object and a center of a rear axle of the vehicle. The angle is determined in relation to a position of the front outermost corner and a position of the center of the rear axle. The method hence focuses first on calculating the angle information. The front outermost corner of the vehicle is, for example, located at a side of a front bumper of the vehicle. The front outermost corner is located at the driver's or the opposite passenger's side of the vehicle depending on which side is furthest away from the front line. The side of the vehicle that faces the front line of the object is thus the side where the front outermost corner is located. The center of the rear axle of the vehicle is in general the point of the vehicle that defines the position of the vehicle. The angle information allows calculating the positions closest to a corner of the object, which the vehicle will pass if it is steered at a steering angle larger than 0 degree at the second location. The angle information should hence be considered to determine reliably the second location information.

According to a further embodiment, the angle information is calculated in relation to a center of rotation of the vehicle in the second location. The center of rotation is determined under consideration of the maximum steering angle and is hence the center of rotation at minimal distance in relation to the vehicle at the second location. If the vehicle is steered at maximum steering angle, it is moved in a circle with the center of rotation as center point. The idea behind this is that it is typically assumed that the vehicle should need as little space in the environment of a parking space as possible in order to move to the third location and then to park forward in the parking space. It is therefore useful to assume steering at the maximum steering angle at the second location when moving backwards away from the parking space. The center of rotation can be determined using trigonometry so that the corresponding calculations are relatively simple to derive. This contributes to a low need in calculation capacity to determine the second location information.

Furthermore, an embodiment comprises that determining the second location information comprises calculating a projection point information describing a projection point of the center of rotation on the front line of the object. The distance between the center of rotation and the project point is set equal to a distance between the center of rotation and the front outermost corner of the vehicle. In other words, a tangential condition is formulated. It is thus assumed that the second location is a point on a tangent line on a circle around the center of rotation. This assumption results in a particular reliable calculation of the second location information and allows for a validity check of the determined second location information.

Another embodiment comprises performing a validity check on the determined second location information. The validity check is based on the assumption that it is possible to determine a second location that is not a reasonable second location for the vehicle to be moved to. The reason for this can be the actual arrangement of the vehicle in relation to the object and/or the parking space. For example, if the vehicle has not passed the parking space far enough or at all, it is possible that the calculation for the second location information does not result in a location at which the vehicle can be steered at any angle without collision with the object. Therefore, only if the validity check is successful, the vehicle is operated and moved to the second location. This results in further reliability of the method.

According to a further embodiment, the validity check comprises evaluating whether the projection point information is larger or equal to a corner position information in a horizontal direction. In this case, the method comprises determining the corner position information by evaluating the provided sensor information. The corner position information describes a position of a corner of the object. At the corner, the front line of the object meets the side line of the object, wherein the side line in particular faces the parking space. The corner is in other words a crossing point where the front line and the side line join each other. The corner is preferably an actual corner of the object and hence the part of the object, which is most likely affected in case of a collision of the vehicle with the object when the vehicle steers away from the parking space at the second location. The horizontal direction is essentially oriented along a length direction of the vehicle in the first location and/or the front line of an object. This further illustrates the above-mentioned tangential condition and allows a simple and quickly performed validity check.

Besides, an embodiment comprises that if the validity check is unsuccessful, the second location information is redetermined. This is the case if an x-value of the projection point information is smaller than an x-value of the corner position information. Redetermination of the second location information is performed under the assumption that in the second location the distance between the center of rotation of the vehicle and the corner of the front line is equal to the distance between the center of rotation and the front outermost corner of the vehicle when the vehicle is rotating with maximum steering angle. Once the redetermined second location information is determined the vehicle is operated from the first location to the second location according to the redetermined second location information. It is hence possible to provide an alternative calculation of the second location information depending on the outcome of the validity check. The method is hence adaptable to situations in which the first described determination method is less useful due to, for example, the arrangement of the first location in relation to the object.

Moreover, an embodiment comprises determining a trajectory between the first location and the second location and operating the vehicle according to the determined trajectory. The trajectory is at least partially and preferably in full a straight line. The trajectory has preferably the same orientation with regard to the horizontal direction as the vehicle in the first location. Preferably, the trajectory is at least essentially parallel to the front line of the object. In particular, no steering of the vehicle is necessary to follow the trajectory between the first and second location due to its shape as a straight line. Therefore, the trajectory describes a straight backward movement of the vehicle so that in particular operating the vehicle comprises only acceleration commands for the drive system of a vehicle and constant steering commands for the steering system. This allows a particularly simple way to reach the second location.

A further embodiment comprises determining the second location information under consideration of a vehicle dimension information describing the dimension of the vehicle. The vehicle dimension information comprises, for example, a vehicle length, in particular including safety tolerances, a vehicle width, in particular including safety tolerances, a vehicle wheelbase, a vehicle distance from rear axle to front axle, and/or a maximum front wheel angle of the vehicle. The maximum front wheel angle is alternatively referred to as maximum steering angle. The determined second location information is thus vehicle dependent and therefore particularly reliable in regard of collision prevention.

A further embodiment comprises operating the vehicle at least assisted from the second location backwards and at maximum steering angle to a third location and from there forwards to a parking location in the parking space. It is possible that the provided method not only provides at least assisted movement of the vehicle between the first and second location, but comprises the whole parking maneuver. To provide the full maneuver for parking into the parking space, it is possible to determine a third location information describing the third location. The third location information may depend on the vehicle dimension information and dimensions of the surroundings of the vehicle, the parking space and the object. Preferably, the inventive method provides the complete forward parking of the vehicle so that at least assisted forward perpendicular or angled parking function covers the whole movement from the first location to the parking location in the parking space.

A further aspect of the invention relates to a vehicle with an at least assisted perpendicular or angled parking function. The vehicle has at least partially passed a perpendicular or angled parking space and an object. The vehicle is located at a first location adjacent to the object. The vehicle configured to provide a sensor information describing the perpendicular or angled parking space and the object, and to provide a first location information describing the first location of the vehicle. Moreover, the vehicle is configured to determine a second location information, which describes a second location for the vehicle which is reachable from the first location by moving the vehicle at least partially straight backwards, under consideration of the provided sensor information and first location information. In the second location, the vehicle is movable backwards away from the parking space with a maximal steering angle of a steering system of the vehicle without collision with the object to prepare forward parking into the parking space. The vehicle is furthermore configured to operate the vehicle at least assisted to move the vehicle from the first location according to the first location information to the second location according to the determined second location information.

The vehicle is preferably a motor vehicle, such as a passenger car, a truck, a bus or a motor bike. The vehicle comprises a processing device. The vehicle may perform the inventive method by means of the processing device.

An embodiment of the vehicle comprises that a sensor device of the vehicle provides the sensor information. The sensor device comprises multiple sensor units positioned at least at a front and rear side of the vehicle. The sensor device is in particular an ultrasonic sensor, a radar device and/or a camera. In a simple embodiment, the vehicle comprises eight ultrasonic sensors of which four are positioned in the front and the other four are positioned in the rear of the vehicle. Of each set of four sensors, two cover the front or rear environment of the vehicle and the other two the side environment of the vehicle. Therefore the other two sensors can be positioned at side edges of a front or rear bumper of the vehicle. Preferably, all eight sensors are positioned in the bumpers of the vehicle. This allows for performing the method without any external data supply because the vehicle provides its own sensor information. In other words, the vehicle is independent from external sensor devices to provide the at least assisted parking function.

Another aspect relates to a processing device for a vehicle. The processing device is, for example, an on-board computer of the vehicle. The processing device is configured to perform the method as described above. The processing device performs the method. The processing device may comprise one or more microprocessors and/or one or more microcontrollers and/or one or more ASIC (application specific integrated circuit). Further, it may comprise a computer program product (meaning program code) that is designed to perform the method. The computer program product may be stored in a data storage of the processing device.

The invention furthermore relates to a computer program product comprising instructions which, when the program is executed by the processing device of the vehicle, cause the processing device to carry out the method as described above. The computer program product can be referred to as computer program.

An information in the sense of the invention can be described by respective data. For example, the sensor information can be described by sensor data. This applies analogously to all information mentioned in the application.

The invention comprises combinations of the described embodiments. It also comprises embodiments of the vehicle, the processing device and the computer program product according to an embodiment or a combination of embodiments of the inventive method.

"Essentially" in the context of the invention may comprise deviations of up to 1 percent, 2 percent, 3 percent, 5 percent, 10 percent, 20 percent, 30 percent, or in particular 50 percent of the corresponding position and/or orientation. In the context of a parallel alignment, "essentially" may comprise deviations of up to 1 degree, 2 degree, 3 degree, 5 degree, 10 degree, 20 degree, 30 degree, or in particular 45 degree. The deviation may be any deviation between the above-mentioned values.

The figures show in:

Fig. 1     a schematic representation of a vehicle;

Fig. 2     a schematic representation of the vehicle in a first and second location;

Fig. 3     a schematic representation of the vehicle turning around at a second location; and

Fig. 4     a schematic representation of a method to operate an at least assisted forward perpendicular or angled parking function.

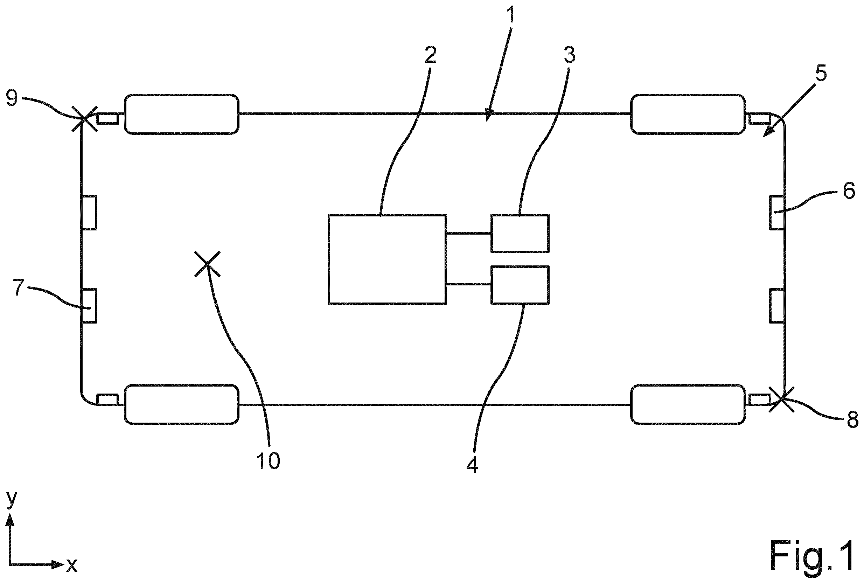

Fig. 1 shows a vehicle 1 that comprises a processing device 2. The vehicle 1 comprises a steering system 3 and a drive system 4. The steering system 3 is determined to operate a transverse guidance of the vehicle 1. The drive system 4 is configured to operate a longitudinal guidance of the vehicle. The processing device 2 provides commands for the steering system 3 and/or the drive system 4. By operating the drive system 4, the vehicle 1 may be accelerated or braked. It is possible that an at least assisted parking function for the vehicle 1 is implemented in the processing device 2. The parking function is a forward perpendicular or angled parking function meaning that it is configured to at least partially assist a forward parking maneuver into a perpendicular or angled parking lot, in particular a perpendicular or fishbone parking lot.

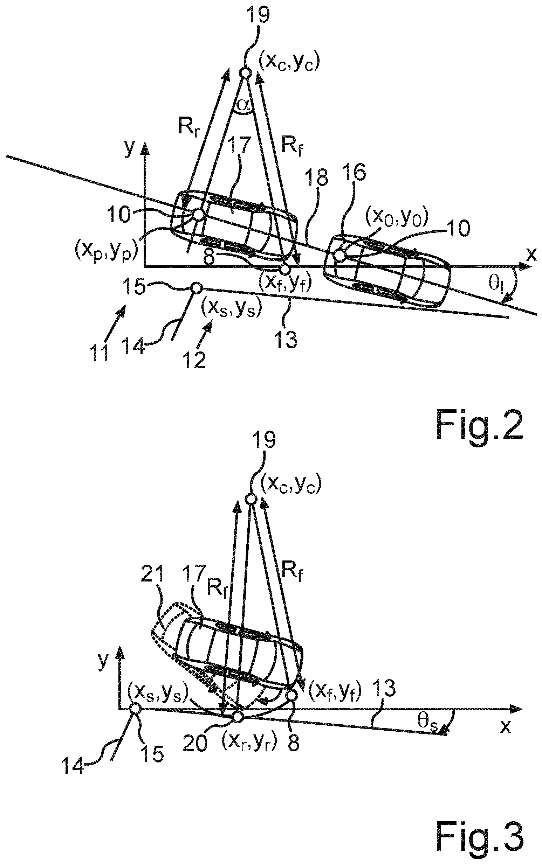

The vehicle 1 comprises a sensor device 5 that may comprise multiple sensor units. Here, the sensor device 5 comprises several front sensors 6 as well as multiple rear sensors 7. The front sensors 6 are positioned at a front end of the vehicle 1 and the rear sensors 7 are positioned at a rear of the vehicle 1. The individual sensor units of the sensor device can be ultrasonic sensors. Alternatively or additionally, the sensor device 5 can comprise at least one radar device and/or at least one camera. The sensor device 5 is configured to provide sensor data, which is in the following referred to as sensor information 20 (see reference sign 20 in Fig. 3). The sensor information 20 describe an environment of the vehicle 1. The environment is determined by a coverage area of the sensor device 5.

Highlighted in Fig. 1 are a front outermost corner 8, a rear innermost corner 9 and a center of a rear axle 10 of the vehicle 1 for left steering. The front outermost corner 8 and the rear innermost corner 9 are positioned at opposite sides of the vehicle 1 both in a longitudinal direction or length directions (x-direction) as well as in a transverse direction or width direction (y-direction) of the vehicle 1.

Fig. 2 shows a straight backward path planned between the vehicle 1 in a first location 16 and the vehicle 1 in a second location 17. The path is sketched as trajectory 18. Adjacent to vehicle 1 there is a parking space 11, which the vehicle 1 has already passed in the first location 16. There is further an object 12 adjacent to the vehicle 1. The object 12 laterally bounds the parking space 11 towards one side of the parking space 11. The object 12 may be a parked vehicle 1, a wall, a building or any other infrastructure element limiting the parking space 11. The vehicle 1 has at least partially passed the object 12 and is located at the first location 16. Edges of the object 12 are defined by a front line 13 facing a driver's side or passenger's side of the vehicle 1 in both the first location 16 and the second location 17. Moreover, the object 12 comprises a side line 14 that faces the parking space 11. At a corner 15 the front line 13 and the side line 14 of the object 12 meet. The corner 15 has the coordinates $(x_s, y_s)$.

The center of the rear axle 10 of the vehicle 1 defines the location of the vehicle 1. In the first location 16 the center of the rear axle 10 of the vehicle 1 is located at the coordinates $(x_0, y_0)$. At the second location 17, the center of the rear axle 10 of the vehicle 1 is located at the coordinates $(x_p, y_p)$. Moreover, the front outermost corner 8 of the vehicle 1 that faces the front line 13 has the coordinates $(x_f, y_f)$ in the second location 17.

Fig. 2 also shows a center of rotation 19 with the coordinates $(x_c, y_c)$ and an angle $\alpha$. The angle $\alpha$ is in the second location 17 the angle between the front outermost corner 8 of the vehicle 1 and the center of the rear axle 10 of the vehicle 1 in relation to the center of rotation 19. The distance between the center of rotation 19 and the center of the rear axle 10 in the second location 17 is marked as $R_r$, whereas the distance between the center of rotation 19 and the front outermost corner 8 of the vehicle 1 in the second location 17 is marked as distance $R_f$.

The first location 16 can alternatively be referred to as specific initial position of the vehicle 1. The first location 16 is described by an orientation angle $\theta_l$. The orientation angle $\theta_l$ is an angle between the orientation of the vehicle 1 in the first location 16 and a reference plane, which is here defined by a horizontal direction (x-axis) and a height direction (not sketched). The second location 17 is a position of the vehicle at which the vehicle can make maximal steering without collision with the object 12. The object 12 is alternatively referred to as end object. At the second location 17, the vehicle 1 can perform maximum steering backward with the front right corner of the vehicle be almost tangential to the front line 13. The front line 13 can alternatively be referred to as object face line.

Fig. 2 also shows an example of a coordinate system with an x-axis and y-axis. The x-axis corresponds to the horizontal direction and the y-axis to a vertical direction. It is alternatively possible to place, for example, the center of the coordinate system at the center of the rear axle 10 at the first location 16, meaning at the coordinates $(x_0, y_0)$.

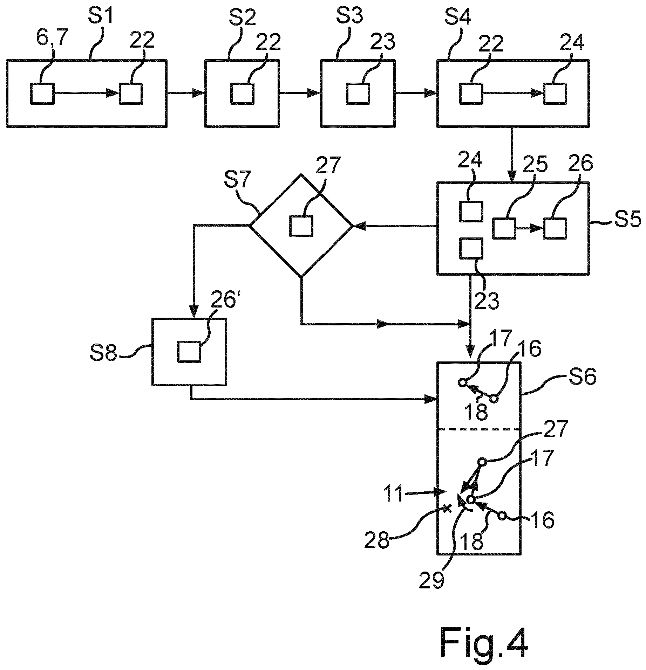

Fig. 3 shows the vehicle 1 at the second location 17 only. It further shows a projection point 20 of the center of rotation 19 on the front line 13 of the object 12. This projection point 20 has the coordinates $(x_r, y_r)$. The distance between the projection point 20 and the center of rotation 19 is the same distance $R_f$ as the distance between the center of rotation 19 and the front outermost corner 8 of the vehicle 1 in the second location 17 as sketched in Fig. 2. At the second location 17, the vehicle 1 can be turned around its own axis along a sketched connection line between the front outermost corner 8 and the projection point 20. This possible circle of rotation is sketched as the connection line between the points $(x_f, y_f)$ and $(x_r, y_r)$. An example of a turned vehicle that has been moved along the circle of rotation is sketched at a turned vehicle position 21. The turned vehicle position 21 is reachable if the vehicle is, for example, turned at maximum steering angle at the second location 17. The reason for this is to prepare a backwards driving maneuver to move the vehicle 1 away from the parking space 11 to a possible third location 27 (sketched in Fig. 4). Starting from the third location 27, the vehicle 1 can be parked in the parking space 11 preferably without any change of driving direction and hence in one path.

Fig. 4 shows steps of a method to operate an at least assisted forward perpendicular or angled parking function of the vehicle 1. The method is performed when the vehicle 1 is first located in the first location 16. A first step S1 may comprise capturing a sensor information 22 by the sensor device 5, here more precisely the front sensors 6 and the rear sensors 7 of the vehicle 1. In a step S2, the captured sensor information 22 is provided for the vehicle 1. The sensor information 22 describes at least the perpendicular or angled parking space 11 and the front line 13 of the object 12.

In a step S3, the method comprises providing a first location information 23 describing the first location 16 of the vehicle 1. The first location information 23 can be provided by a positioning device of the vehicle 1, for example, based on a global navigation satellite system (GNSS), such as the global positioning system (GPS). The first location information 23 can alternatively be determined in relation to the object 12 and/or the parking space 11 an can thus be determined under consideration of the provided sensor information 22.

In a step S4, a corner position information 24 may be determined. Therefore, the provided sensor information 22 is evaluated. The corner position information 23 describes the position of the corner 15 where the front line 13 of the object 12 meets the side line 14 of the object 12. The corner position information 24 may, for example, be determined under consideration of camera data describing the object 12 as sensor information 22.

A step S5 comprises determining a second location information 26 that describes the second location 17 of the vehicle 1. The second location information 26 is determined under consideration of the provided sensor information 22 and the provided first location information 23. In particular, it is determined under consideration of the determined corner position information 24. Furthermore, it is possible to consider a vehicle dimension information 25 describing the dimension of the vehicle 1 to calculate the second location information 26. The second location 26 is defined as a position of the vehicle 1, which is reachable from the first location 16 by moving the vehicle 1 at least partially straight backwards. Preferably, the whole trajectory 18 between the first location 16 and the determined second location 17 is a straight line so that consequently no steering movements of the vehicle 1 are necessary to drive along the trajectory 18. At the second location 17 the vehicle 1 is movable backwards away from the parking space 11 with a maximum steering angle of the steering system 3 of the vehicle 1 without collision with the object 12.

Determining the second location information 17 comprises calculating an angle information. The angle information describes the angle $\alpha$. The angle information is calculated in relation to the center of rotation 19 of the vehicle 1 in the second location 17. The center of rotation 19 is determined under consideration of the maximum steering angle of the vehicle 1. Determining the second location information 26 may also comprise calculating a projection point information that describes the projection point 20. The distance between the center of rotation 19 and the projection point 20 is set equal to the distance between the center of rotation 19 and the front outermost corner of the vehicle 8, both regarded in the second location 17.

The distance $R_r$ between the center of rotation 19 and the center of the rear axle 10 in the second location 17 may alternatively be referred to as radius of rotation of the vehicle 1 at the center of the rear axle 10. It can be calculated as follows under consideration of a wheelbase ($\ell$) of the vehicle 1 and the maximum steering angle $\varphi_{max}$ for steering backwards:

$$R_r = \frac{\ell}{tan(\varphi_{max})} \qquad [1]$$

By assuming that the vehicle 1 has a total length (L), width (w), and distance from rear axle to rear bumper (k), the radius of rotation at the front outermost corner 8 of the vehicle 1, meaning the distance $R_f$ between the front outermost corner 8 and the center of rotation 19 can be computed as follows:

$$R_f = \sqrt{\left(R_r + \frac{w}{2}\right)^2 + (L - k)^2} \qquad [2]$$

The angle $\alpha$ is the angle between the lines of the two radii or distances $R_r$ and $R_f$. It can be calculated by basic trigonometry.

$$\alpha = tan^{-1}\left(\frac{L - k}{R_r + \frac{w}{2}}\right) \qquad [3]$$

It is required to derive a formula to calculate the second location 17 of the vehicle 1 with the coordinates ($x_p$, $y_p$). Then, the location of the vehicle's center of rotation 19 with the coordinates ($x_c$, $y_c$) and the front outermost corner 8 with the coordinates ($x_f$, $y_f$) need to be presented in terms of the location ($x_p$, $y_p$) of the projection point 20 as follows: By applying basic trigonometry on ($x_c$, $y_c$) and ($x_f$, $y_f$) can be presented in terms of ($x_p$, $y_p$) as follows. It should be clear

that $\theta_l$ is negative in fig. 2 as it is measured from the horizontal direction to the planned trajectory 18 in clockwise direction.

$$x_c = x_p + R_r \cos(90° + \theta_l)$$
$$y_c = y_p + R_r \sin(90° + \theta_l)$$

$$\therefore x_c = x_p - R_r \sin(\theta_l) \qquad\qquad [4]$$

$$\therefore y_c = y_p + R_r \cos(\theta_l) \qquad\qquad [5]$$

$$x_f = x_c - R_f \sin(-\alpha - \theta_l) = x_c + R_f \sin(\alpha + \theta_l)$$
$$y_f = y_c - R_f \cos(-\alpha - \theta_l) = y_c - R_f \cos(\alpha + \theta_l)$$

$$\therefore x_f = x_p - R_r \sin(\theta_l) + R_f \sin(\alpha + \theta_l) \qquad\qquad [6]$$

$$\therefore y_f = y_p + R_r \cos(\theta_l) - R_f \cos(\alpha + \theta_l) \qquad\qquad [7]$$

In order to have a tangential path with the specific center of rotation 19, a circle should be drawn from the center of rotation 19 and be tangent to the specified front line 13. Fig. 3 shows the projected line from the center of rotation 19 with coordinates $(x_c, y_c)$ perpendicular on an entrance side of the parking space 11. The point $(x_r, y_r)$ is the projection of $(x_c, y_c)$ on the front line 13. The radius of the tangential circular path is $(R_f)$, which is the biggest radius of rotation for a point on the vehicle 1. The entrance side and the front line 13 has an angle $\theta_s$ with the horizontal direction (x-axis), which should be negative in Fig. 3 as it is clockwise.

The projection point 20 with the coordinates $(x_r, y_r)$ can be computed as it is the intersection of two known orthogonal lines with known slopes as follows.

$$y_r - y_s = \tan(\theta_s) (x_r - x_s)$$

$$y_r - y_c = \left(\frac{-1}{\tan(\theta_s)}\right) (x_r - x_c)$$

For simplicity, let

$$K_s = \tan(\theta_s)$$

$$\therefore y_r - y_s = K_s x_r - K_s x_s$$

$$\therefore K_s y_r - K_s y_c = -x_r + x_c$$

By solving these two equations, the coordinates $(x_r, y_r)$ can be computed as follows.

$$K_s (K_s x_r - K_s x_s + y_s) - K_s y_c = -x_r + x_c$$

$$x_r = \frac{K_s\, y_c + K_s{}^2\, x_s - K_s\, y_s + x_c}{K_s{}^2 + 1} \qquad [8]$$

$$y_r = K_s\, x_r - K_s\, x_s + y_s$$

$$y_r = \frac{y_s + K_s{}^2\, y_c + K_s\, x_c - K_s\, x_s}{K_s{}^2 + 1} \qquad [9]$$

$$\therefore x_r - x_c = \frac{K_s\, y_c + K_s{}^2\, x_s - K_s\, y_s - K_s{}^2\, x_c}{K_s{}^2 + 1}$$

$$\therefore y_r - y_c = \frac{y_s - y_c + K_s\, x_c - K_s\, x_s}{K_s{}^2 + 1}$$

For simplicity, let us introduce the following parameters.

$$a = \frac{1}{K_s{}^2 + 1}$$

$$b = \frac{K_s}{K_s{}^2 + 1}$$

$$c = \frac{K_s{}^2}{K_s{}^2 + 1}$$

$$d = R_r\, sin(\theta_l)$$

$$e = R_r\, cos(\theta_l)$$

$$\therefore x_r - x_c = b\, y_c + c\, x_s - b\, y_s - c\, x_c$$

$$\therefore y_r - y_c = a\, y_s - a\, y_c + b\, x_c - b\, x_s$$

Then, from equations [4] and [5]:

$$x_c = x_p - d$$

$$y_c = y_p + e$$

$$\therefore x_r - x_c = b\, y_p + c\, x_s - b\, y_s - c\, x_p + b\, e + c\, d$$

$$\therefore \; y_r - y_c \;=\; a\,y_s \;-\; a\,y_p \;+\; b\,x_p \;-\; b\,x_s \;-\; a\,e \;-\; b\,d$$

To simplify more, the absolute values are collected in one parameter for every equation:

$$w \;=\; b\,e + c\,d$$

$$v \;=\; a\,e + b\,d$$

$$\therefore \; x_r - x_c \;=\; b\,y_p + c\,x_s - b\,y_s - c\,x_p + w$$

$$\therefore \; y_r - y_c \;=\; a\,y_s \;-\; a\,y_p \;+\; b\,x_p \;-\; b\,x_s \;-\; v$$

The condition for tangency can be formulated by specifying the distance between the center of rotation 19 with the coordinates ($x_c$, $y_c$) and its projection point 20 with coordinates ($x_r$, $y_r$) as the corner outer radius of rotation of the vehicle ($R_f$).

A formula for the distance between the center of rotation 19 with the coordinates ($x_c$, $y_c$) and its projection ($x_r$, $y_r$) can be obtained as follows:

$$(x_r - x_c)^2 + (y_r - y_c)^2 \;=\; R_f{}^2$$

$$\left(b\,y_p + c\,x_s - b\,y_s - c\,x_p + w\right)^2 + \left(a\,y_s - a\,y_p + b\,x_p - b\,x_s - v\right)^2 \;=\; R_f{}^2$$

By expanding the squared terms and simplifying, the following equation can be obtained:

$$\begin{aligned}
(a^2 + b^2)\,y_p{}^2 &+ (c^2 + b^2)\,x_s{}^2 + (a^2 + b^2)\,y_s{}^2 + (c^2 + b^2)\,x_p{}^2 + w^2 + v^2 + 2(ab + bc)\,x_s y_p \\
&- 2(a^2 + b^2)\,y_s y_p - 2(ab + bc)\,x_s y_s - 2(ab + bc)\,x_p y_p + 2(ab + bc)\,x_p y_s \\
&- 2(c^2 + b^2)\,x_p x_s - 2(bw + av)\,y_s + 2(bw + av)\,y_p + 2(cw + bv)\,x_s \\
&- 2(cw + bv)\,x_p \;=\; R_f{}^2
\end{aligned}$$

In order to simplify the equation, the following parameters are introduced:

$$m = a^2 + b^2$$

$$n = c^2 + b^2$$

$$p = w^2 + v^2$$

$$q = ab + bc$$

$$r = bw + av$$

$$s = cw + bv$$

By substitution in the upper equation, the following equation can be obtained.

$$m\, y_p{}^2 + n\, x_s{}^2 + m\, y_s{}^2 + n\, x_p{}^2 + p + 2q\, x_s y_p - 2m\, y_s y_p - 2q\, x_s y_s - 2q\, x_p y_p + 2q\, x_p y_s$$
$$- 2n\, x_p x_s - 2r\, y_s + 2r\, y_p + 2s\, x_s - 2s\, x_p = R_f{}^2 \qquad [10]$$

Since the coordinates $(x_p, y_p)$ are located on the line passing through the first location 16 of the vehicle 1 with the coordinates $(x_0, y_0)$ and with orientation $(\theta_l)$, then there is another known equation for $(x_p, y_p)$:

$$y_p - y_0 = \tan(\theta_l)\,(x_p - x_0)$$

$$\therefore\ y_p = \tan(\theta_l)\,x_p + y_0 - \tan(\theta_l)\,x_0$$

Furthermore, other parameters to be introduce are:

$$K_l = \tan(\theta_l)$$

$$c_l = y_0 - \tan(\theta_l)\,x_0$$

$$y_p = K_l\,x_p + c_l \qquad [11]$$

By substitution of [11] in [10], the following equation can be obtained with only one unknown variable $(x_p)$.

$$m\left[K_l\,x_p + c_l\right]^2 + n\,x_s{}^2 + m\,y_s{}^2 + n\,x_p{}^2 + p + 2q\,x_s\left[K_l\,x_p + c_l\right] - 2m\,y_s\left[K_l\,x_p + c_l\right] - 2q\,x_s y_s$$
$$- 2q\,x_p\left[K_l\,x_p + c_l\right] + 2q\,x_p y_s - 2n\,x_p x_s - 2r\,y_s + 2r\left[K_l\,x_p + c_l\right] + 2s\,x_s$$
$$- 2s\,x_p = R_f{}^2$$

$$\therefore\ \left(m\,K_l{}^2\right)x_p{}^2 + (2mK_l c_l)\,x_p + n\,x_p{}^2 + (2qx_s K_l)\,x_p - (2my_s K_l)\,x_p - (2qK_l)\,x_p{}^2 - (2qc_l)\,x_p$$
$$+ (2qy_s)\,x_p - (2nx_s)\,x_p + (2rK_l)\,x_p - (2s)\,x_p$$
$$= R_f{}^2 - n\,x_s{}^2 - m\,y_s{}^2 - p + 2q\,x_s y_s + 2r\,y_s - 2s\,x_s - m\,c_l{}^2 - 2qx_s c_l$$
$$+ 2my_s c_l - 2rc_l$$

$$\therefore\ \left(m\,K_l{}^2 + n - 2qK_l\right)x_p{}^2$$
$$+ (2mK_l c_l + 2qx_s K_l - 2my_s K_l - 2qc_l + 2qy_s - 2nx_s + 2rK_l - 2s)\,x_p$$
$$+ \left(n\,x_s{}^2 + m\,y_s{}^2 + p - 2q\,x_s y_s - 2r\,y_s + 2s\,x_s + m\,c_l{}^2 + 2qx_s c_l - 2my_s c_l\right.$$
$$\left. + 2rc_l - R_f{}^2\right) = 0$$

$$\therefore\ A\,x_p{}^2 + B\,x_p + C = 0$$

$$\therefore\ x_p = \frac{-B \pm \sqrt{B^2 - 4AC}}{2A}$$

where,

$$A = m\,K_l{}^2 + n - 2qK_l$$

$$B = 2mK_l c_l + 2q x_s K_l - 2m y_s K_l - 2q c_l + 2q y_s - 2n x_s + 2r K_l - 2s$$

$$C = n x_s{}^2 + m y_s{}^2 + p - 2q x_s y_s - 2r y_s + 2s x_s + m c_l{}^2 + 2q x_s c_l - 2m y_s c_l + 2r c_l - R_f{}^2$$

Then, $y_p$ can be computed from $x_p$ using equation [11].

According to a step S6 as sketched in Fig. 4, the vehicle 1 is operated to move the vehicle 1 from the first location 16 according to the first location information 24 to the second location 17 according to the determined second location information 26. The operating is at least assisted, meaning that, for example, steering commands to perform the straight backward movement are performed by the steering system 3 of the vehicle 1, whereas the driver of the vehicle 1 still has to manually accelerate the vehicle 1 so that it is moved along the trajectory 18. When the second location 17 is reached, the driver may be informed to manually stop the vehicle 1. Alternatively or additionally, acceleration commands for the drive system 4 of the vehicle 1 are provided.

In a step S7, a validity check 27 is performed on the determined second location information 26. If the validity check 27 is successful, the vehicle 1 is moved to the second location 17 according to the already determined second position information 26. It is hence moved according to the trajectory 18. If, however, the validity check 26 is not positive or unsuccessful, a step S8 is performed which comprises redetermining the second location information 26 to determine the redetermined second location information 26'. In step S6, the vehicle 1 is then operated from the first location 16 to the second location 17 according to the redetermined second location information 26'.

During the validity check 26 it is evaluated whether the projection point 20 according to the projection point information is larger or equal to the corner position information 24 in the horizontal direction.

The computed second location 17 with the coordinates $(x_p, y_p)$ as determined with the above-described equations is valid, if its tangent intersection point with the front line 13 is larger than the corner 15 with the coordinates $(x_s, y_s)$ in x-direction. This means that the projection point 20 with the coordinates $(x_r, y_r)$ from the center of rotation 19 with the coordinates $(x_c, y_c)$ on the front line 13 satisfies the following condition. $x_r$ can be computed from the coordinates $(x_p, y_p)$ using equations [4], [5] ,and [8].

$$x_r = b y_p + c x_s - b y_s + a x_p + w - d$$

$$x_r \geq x_s$$

Redetermination of the second location information 26 is performed under the assumption that in the second location 17 the distance between the center of rotation 19 of the vehicle 1 and the corner 15 of the front line 13 of the object 12 is equal to the distance between the center of rotation 19 and the front outermost corner 8 of the vehicle 1 while rotating the vehicle 1 with maximum steering angle.

If Redetermination is performed, the trajectory 18 does not need to be tangential to the front line 14, and can be in touch with the corner 15 with the coordinates $(x_s, y_s)$. In such a case, the calculation of the coordinates $(x_p, y_p)$ can be easier by just setting the distance $R_f$ from $(x_c, y_c)$ to $(x_s, y_s)$ as follows:

$$(y_s - y_c)^2 + (x_s - x_c)^2 = R_f{}^2$$

By substitution with [4] and [5],

$$\left(y_s - y_p - R_r \cos(\theta_l)\right)^2 + \left(x_s - x_p + R_r \sin(\theta_l)\right)^2 = R_f{}^2$$

By substitution with [11],

$$\left(y_s - K_l\, x_p - c_l - R_r\, cos(\theta_l)\right)^2 + \left(x_s - x_p + R_r\, sin(\theta_l)\right)^2 = R_f^{\ 2}$$

$$\therefore \left(K_l^{\ 2}\right) x_p^{\ 2} - 2K_l(y_s - c_l - R_r\, cos(\theta_l))\, x_p + (y_s - c_l - R_r\, cos(\theta_l))^2 + x_p^{\ 2}$$
$$- 2(x_s + R_r\, sin(\theta_l))x_p + (x_s + R_r\, sin(\theta_l))^2 = R_f^{\ 2}$$

$$\therefore \left(K_l^{\ 2} + 1\right) x_p^{\ 2} - 2(K_l(y_s - c_l - R_r\, cos(\theta_l)) + x_s + R_r\, sin(\theta_l))\, x_p$$
$$+ \left((y_s - c_l - R_r\, cos(\theta_l))^2 + (x_s + R_r\, sin(\theta_l))^2 - R_f^{\ 2}\right) = 0$$

$$\therefore A\, x_p^{\ 2} + B\, x_p + C = 0$$

$$\therefore x_p = \frac{-B \pm \sqrt{B^2 - 4AC}}{2\,A}$$

where,

$$A = K_l^{\ 2} + 1$$

$$B = -2(K_l(y_s - c_l - R_r\, cos(\theta_l)) + x_s + R_r\, sin(\theta_l))$$

$$C = (y_s - c_l - R_r\, cos(\theta_l))^2 + (x_s + R_r\, sin(\theta_l))^2 - R_f^{\ 2}$$

Then, $y_p$ can be computed from $x_p$ using equation [11].

In step S6, the at least assisted operation of the vehicle 1 may comprises moving the vehicle 1 backwards at maximum steering angle or any other steering angle away from the second location 17 to the third location 27. At the second location 17 the vehicle 1 is hence rotated according to the rotation arrow 29 and then moved backwards to the third location 27. From the third location 27, the vehicle 1 is moved in forward direction to park at a parking location 28 in the parking space 11. It is hence possible to perform a complete parking maneuver for the vehicle 1. In that case, the trajectory 18 is extended and also comprises sections beyond the straight line sketched as trajectory 18 in Fig. 2.

In summary, the invention shows how to determine a point at which the vehicle 1 is guaranteed to be steered collision free in regard to the object 12. This point is the second location 17.

The algorithm to compute the method including the validity check 27 can be summarized as follows:

$$R_r = \frac{\ell}{tan(\varphi_{max})}$$

$$R_f = \sqrt{\left(\frac{\ell}{tan(\varphi_{max})} + \frac{w}{2}\right)^2 + (L - k)^2}$$

$$K_s = \tan(\theta_s)$$

$$K_l = \tan(\theta_l)$$

$$c_l = y_0 - \tan(\theta_l)\, x_0$$

$$a = \frac{1}{K_s^2 + 1} = \cos^2(\theta_s)$$

$$b = \frac{K_s}{K_s^2 + 1} = \sin(\theta_s)\,\cos(\theta_s)$$

$$c = \frac{K_s^2}{K_s^2 + 1} = \sin^2(\theta_s)$$

$$d = R_r\,\sin(\theta_l)$$

$$e = R_r\,\cos(\theta_l)$$

$$w = b\,e + c\,d$$

$$v = a\,e + b\,d$$

$$m = a^2 + b^2$$

$$n = c^2 + b^2$$

$$p = w^2 + v^2$$

$$q = ab + bc$$

$$r = bw + av$$

$$s = cw + bv$$

$$A = m\,K_l^2 + n - 2qK_l$$

$$B = 2mK_l c_l + 2qx_s K_l - 2my_s K_l - 2qc_l + 2qy_s - 2nx_s + 2rK_l - 2s$$
$$C = n\, x_s^2 + m\, y_s^2 + p - 2q\, x_s y_s - 2r\, y_s + 2s\, x_s + m\, c_l^2 + 2qx_s c_l - 2my_s c_l + 2rc_l$$
$$- R_f^2$$

$$x_p = \frac{-B \pm \sqrt{B^2 - 4AC}}{2\,A}$$
$$y_p = K_l\, x_p + c_l$$
$$x_r = b\, y_p + c\, x_s - b\, y_s + a\, x_p + w - d$$
$$if\ x_r \geq x_s$$
$$Then\ OK$$

$$if\ x_r < x_s$$
$$A = K_l^2 + 1$$
$$B = -2(K_l(y_s - c_l - R_r\, cos(\theta_l)) + x_s + R_r\, sin(\theta_l))$$
$$C = (y_s - c_l - R_r\, cos(\theta_l))^2 + (x_s + R_r\, sin(\theta_l))^2 - R_f^2$$
$$x_p = \frac{-B \pm \sqrt{B^2 - 4AC}}{2\,A}$$
$$y_p = K_l\, x_p + c_l$$

**Claims**

1. Method to operate an at least assisted perpendicular or angled parking function for a vehicle (1), wherein the vehicle (1) has at least partially passed a perpendicular or angled parking space (11) and an object (12) and is located at a first location (16) adjacent to the object (12), wherein the method comprises:

   - providing (S2) a sensor information (22) describing the perpendicular or angled parking space (11) and the object (12);
   - providing (S3) a first location information (23) describing the first location (16) of the vehicle (1);
   - under consideration of the sensor information (22) and the provided first location information (23), determining (S5) a second location information (26) describing a second location (17) for the vehicle (1) which is reachable from the first location (16) by moving the vehicle (1) at least partially straight backwards, wherein at the second location (17) the vehicle (1) is movable backwards away from the parking space (11) with a maximal steering angle of a steering system (3) of the vehicle (1) without collision with the object (12) to prepare parking into the parking space (11); and
   - operating (S6) the vehicle (1) at least assisted to move the vehicle (1) from the first location (16) according to the first location information (23) to the second location (17) according to the determined second location information (26).

2. Method according to claim 1, wherein the first location information (23) describes a position and an orientation of the first location (16) in relation to a reference plane.

3. Method according to any of the preceding claims, wherein determining the second location information (26) comprises calculating an angle information describing in the second location (17) an angle between a front outermost corner (8) of the vehicle (1) facing a front line (13) of the object (12) and a center of a rear axle (10) of the vehicle (1).

4. Method according to claim 3, wherein the angle information is calculated in relation to a center of rotation (19) of the vehicle (1) in the second location (17), wherein the center of rotation (19) is determined under consideration of the maximum steering angle.

5. Method according to claim 4, wherein determining the second location information (26) comprises calculating a projection point information describing a projection point (20) of the center of rotation (19) on the front line (13) of the object (12), wherein a distance between the center of rotation (19) and the projection point (20) is set equal to a distance between the center of rotation (19) and the front outermost corner (8) of the vehicle (1).

6. Method according to claim 5, comprising performing a validity check (27) on the determined second location information (26), wherein only if the validity check (27) is successful the vehicle (1) is moved to the second location (17).

7. Method according to claim 6, wherein the validity check (17) comprises evaluating whether the projection point information is larger or equal to a corner position information (24) in a horizontal direction, wherein the horizontal direction is essentially oriented along a length direction of the vehicle (1) and/or the front line (13) of the object (12) and the corner position information (24) describes a position of a corner (15) where the front line (13) of the object (12) meets a side line (14) of the object (12) that in particular faces the parking space (11).

8. Method according to claim 6 or 7, wherein if the validity check (27) is unsuccessful, the second location information (26) is redetermined under the assumption that in the second location (17) the distance between the center of rotation (19) of the vehicle (1) and the corner (15) of the front line (13) is equal to the distance between the center of rotation (19) and the front outermost corner (8) of the vehicle (1) when the vehicle (1) is rotating with maximum steering angle, wherein the vehicle (1) is operated from the first location (16) to the second location (17) according to the redetermined second location information (26').

9. Method according to any of the preceding claims, comprising determining a trajectory (18) between the first location (16) and the second location (17) and operating the vehicle (1) according to the determined trajectory (18), wherein the trajectory (18) describes a straight backward movement of the vehicle (1) so that in particular operating the vehicle (1) comprises only acceleration commands for a drive system (4) of the vehicle.

10. Method according to any of the preceding claims, wherein determining the second location information (26) comprises considering a vehicle dimension information (25) describing a dimension of the vehicle (1).

11. Method according to any of the preceding claims, comprising operating the vehicle (1) at least assisted from the second location (17) backwards and at maximum steering angle to a third location (27) and from there forwards to a parking location (28) in the parking space (11).

12. Vehicle (1) with an at least assisted perpendicular or angled parking function, wherein the vehicle (1) has at least partially passed by a perpendicular or angled parking space (11) and an object (12) and is located at a first location (16) adjacent to the object (12) and is configured:

- to provide a sensor information (22) describing the perpendicular or angled parking space (11) and the object (12);
- to provide a first location information (23) describing the first location (16) of the vehicle (1);
- under consideration of the provided sensor information (22), and first location information (23), to determine a second location information (26) describing a second location (17) for the vehicle (1) which is reachable from the first location (16) by moving the vehicle (1) at least partially straight backwards, wherein at the second location (17) the vehicle (1) is movable backwards away from the parking space (11) with a maximal steering angle of a steering system (3) of the vehicle (1) without collision with the object (12) to prepare parking into the parking space (11); and
- to operate the vehicle (1) at least assisted to move the vehicle (1) from the first location (16) according to the first location information (23) to the second location (17) according to the determined second location information (26).

13. Vehicle (1) according to claim 12, wherein the vehicle (1) comprises a sensor device (5), in particular an ultrasonic sensor, a radar device and/or a camera, that captures and provides the sensor information (22), wherein the sensor device (5) in particular comprises multiple sensor units positioned at least at a front and rear side of the vehicle (1).

14. Processing device (2) for a vehicle (1) configured to perform a method according to any of claims 1 to 11.

15. Computer program product comprising instructions which, when the program is executed by a processing device (2), cause the processing device (2) to carry out a method according to any of claims 1 to 11.

Fig.1

Fig.2

Fig.3

Fig.4

Europäisches
Patentamt

European
Patent Office

Office européen
des brevets

# EUROPEAN SEARCH REPORT

Application Number

EP 22 17 7621

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/087406 A1 (BARTH HARALD [DE] ET AL) 14 April 2011 (2011-04-14) | 1,2,9, 12,14,15 | INV. B62D15/02 G01S5/16 |
| Y | * paragraphs [0012], [0013], [0019], [0022], [0023], [0055]; claims; figures * | 1,3-8, 10-15 | |
| | ----- | | |
| Y | US 2010/100270 A1 (KUO YUNG-YUAN [TW] ET AL) 22 April 2010 (2010-04-22) * paragraphs [0040], [0043]; claims; figures * | 3-8,10, 11,13 | |
| | ----- | | |
| Y | EP 3 608 189 A1 (CLARION CO LTD [JP]) 12 February 2020 (2020-02-12) * paragraphs [0006] - [0008], [0015], [0019], [0023], [0025], [0030] - [0033], [0038], [0049]; claims; figures * | 1,12,14, 15 | |
| | ----- | | |

TECHNICAL FIELDS
SEARCHED (IPC)

B62D
G01S

The present search report has been drawn up for all claims

| Place of search | Date of completion of the search | Examiner |
|---|---|---|
| The Hague | 1 November 2022 | Ducher, Alban |

EPO FORM 1503 03.82 (P04C01)

## ANNEX TO THE EUROPEAN SEARCH REPORT
## ON EUROPEAN PATENT APPLICATION NO.

EP 22 17 7621

01-11-2022

| Patent document cited in search report | | Publication date | Patent family member(s) | | Publication date |
|---|---|---|---|---|---|
| US 2011087406 | A1 | 14-04-2011 | CN | 102066186 A | 18-05-2011 |
| | | | DE | 102008027779 A1 | 17-12-2009 |
| | | | EP | 2282922 A1 | 16-02-2011 |
| | | | JP | 5469663 B2 | 16-04-2014 |
| | | | JP | 2011522737 A | 04-08-2011 |
| | | | KR | 20110034593 A | 05-04-2011 |
| | | | KR | 20160003329 A | 08-01-2016 |
| | | | US | 2011087406 A1 | 14-04-2011 |
| | | | WO | 2009149847 A1 | 17-12-2009 |
| US 2010100270 | A1 | 22-04-2010 | TW | 201016506 A | 01-05-2010 |
| | | | US | 2010100270 A1 | 22-04-2010 |
| EP 3608189 | A1 | 12-02-2020 | CN | 110494336 A | 22-11-2019 |
| | | | EP | 3608189 A1 | 12-02-2020 |
| | | | JP | 7002210 B2 | 20-01-2022 |
| | | | JP | 2018176910 A | 15-11-2018 |
| | | | US | 2020041287 A1 | 06-02-2020 |
| | | | WO | 2018186406 A1 | 11-10-2018 |

EPO FORM P0459

For more details about this annex : see Official Journal of the European Patent Office, No. 12/82